# EUROPEAN PATENT APPLICATION

(11) **EP 1 123 725 A1**
(43) Date of publication of application: **16.08.2001**
(21) Application number: 00830083.2
(22) Date of filing: 08.02.2000
(51) Int. Cl.: B01D 46/04

(54) **A blower device for cleaning dust filters**

(71) Applicant: WAM S.p.A., 41030 Ponte Motta Cavezzo (Modena) (IT)
(72) Inventor: Vincenzi, Lamberto, 41030 S. Prospero Sulla Secchia (MO) (IT); Marchi, Germano, 41032 Cavezzo (MO) (IT)
(74) Representative: Gotra, Stefano

(57) **Abstract**

The blower device of the invention comprises a compressed-air tank (5) connected to a filtering element (3) of a filter (2) by a valve (4) which during normal operation closes the connection, but which can be opened periodically on command in order to blow compressed air for cleaning the filtering element (3). A distributor conduit (9) is situated at the outlet of the valve (4), through which air is blown on the filtering element (3). The distributor conduit (9) bears a plurality of aligned nozzles (12), each of which has an air passage transversal section which has an initial tract (12a) that gradually converges towards an outlet opening (9). The device is particularly useful in countercurrent against a dust filter provided with filtering elements (3) having an elongate transversal section.

## Description

Specifically, though not exclusively, the invention can be used for counter-current cleaning of a dust filter having filtering elements with an elongate transversal section.

During normal use, the filtering walls of a dust filter are crossed, from the outside towards the inside, by air needing filtering. By passing through the filter walls the dust particles suspended in the air are stopped by the walls and deposit thereon, which leads to a need for the walls to be cleaned periodically to free them from the particles, so that their filtering capacity can be restored. The blower device of the invention serves this purpose.

In particular reference is made to a device of the type comprising a source of compressed air connected to a filter element through a blower valve. During normal filter use the connection is closed and can be opened periodically to send compressed air to the filtering surface to be cleaned. The device further comprises a distribution conduit having an inlet for the compressed air, connected with the valve, and also having at least one outlet hole situated on the lateral surface of the conduit, through which hole the air is sent to the filtering element. Sending the compressed air causes the particles of dust adhering to the filtering surface to detach, both because of the vibration of the filtering surface and due in general to the action of the air hitting the surface in counter-current.

A device of the above-described type already exists in the prior art, in which a distributor conduit of the compressed air is interpositioned between the blower valve and the filtering element. The distributor conduit is a holed metal pipe, with the holes arranged aligned and facing the filtering element to be cleaned.

Known devices of this type, however, contain some limitations and drawbacks. Firstly, in known devices the flow of compressed air loses much of its power, especially in the passage through the distributor conduit, and consequently produces a scarcely efficient compressed-air jet in relation to the power output at source. In other words, the energy on impact of the compressed air on the filtering surface is considerably inferior to the potential energy content as the air leaves the blower valve.

Secondly, the known devices are unable to distribute the compressed air uniformly, or in any case in such a manner as to obtain the aim, i.e. detachment of the dust particles from the whole dirty filter surface. In particular, the flow of compressed air, before reaching the filtering surfaces to be cleaned, is split up into a plurality of small jets, isolated and spread out, whose total overall action on the surfaces is relatively weak and ineffectual.

The above-described drawbacks in the prior art are made more serious in cases where the devices are used for cleaning filtering elements having an elongate transversal section.

The main aim of the present invention is to obviate the above-mentioned limitations and drawbacks in the prior art by providing an extremely efficient blower device able to turn the energetic capacity available, i.e. the pressure of the compressed air at source, into a high-performance filter-cleaning tool.

An advantage of the present invention is that it achieves a drastic reduction in head loss, both in concentrated and in distributed jets.

A further advantage of the invention is that it provides an extremely efficient cleaning tool, achieving high performance results in the special case where the device is used to clean filtering elements having an elongate transversal section.

A still further advantage of the invention is that it provides a blower device which is able to distribute and direct the compressed air jet towards the filtering surface to be cleaned while maximising the energy of the jet and thus achieve a practically total detachment of the dust particles from the filtering surface.

These aims and advantages and others besides are all attained by the device of the invention, as it is characterised in the following claims.

Further characteristics and advantages of the present invention will better emerge from the detailed description that follows of a preferred but non-exclusive embodiment of the invention, illustrated purely by way of a nonlimiting example in the accompanying figures of the drawings, in which:

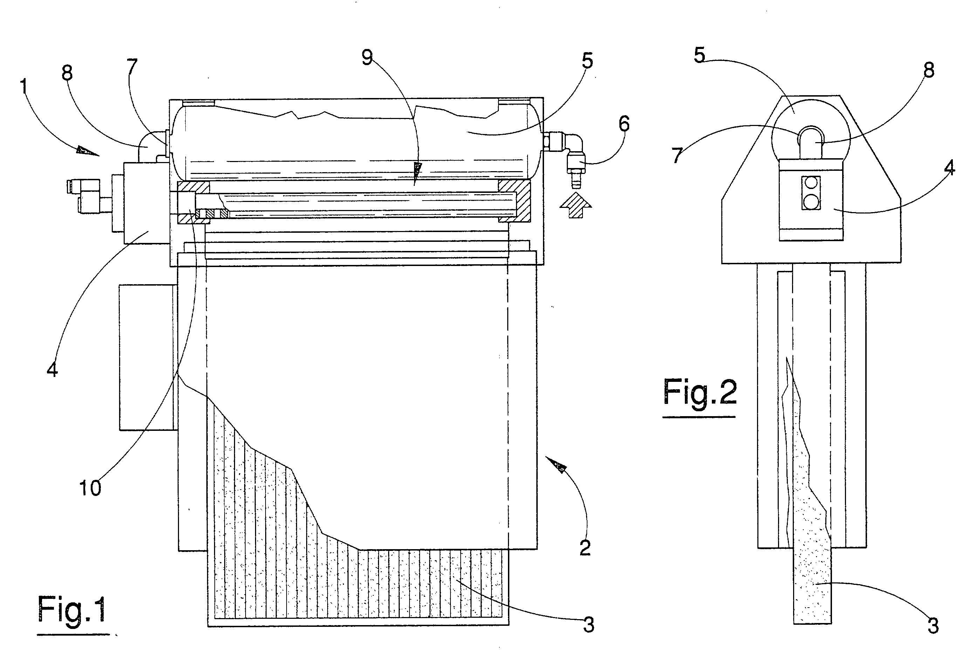

figure 1 is a schematic lateral view in vertical elevation of a device made according to the invention, applied to a filtering element of a dust filter, with some parts removed better to identify others;
figure 2 is a view from the left of figure 1;

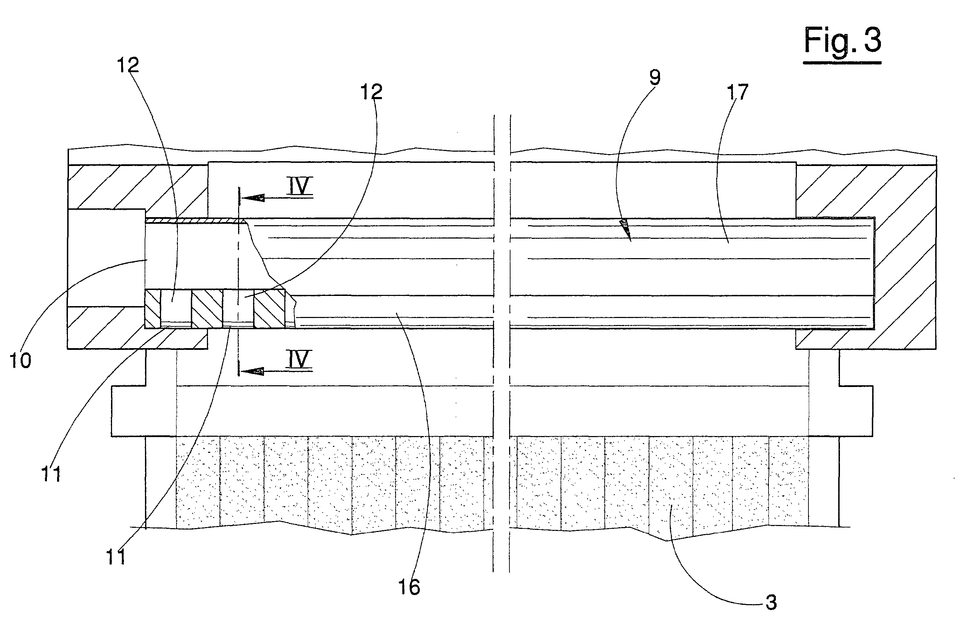

figure 3 is an enlarged-scale view of a detail of figure 1, comprising the compressed-air distributor conduit;
figure 4 is an enlarged-scale view of a section made according to line IV-IV of figure 3;
figure 5 is a view from below of figure 4.

With reference to the figures of the drawings, 1 denotes in its entirety a blower device for counter-current cleaning of filtering elements. The device I is applied to a dust filter 2 which is used for cleaning dust-polluted air. The filter 2 is provided with one or more filtering elements 3 having a pleated filtering surface. The transversal section of the filtering element 3, which in this particular case is made by sectioning the element 3 horizontally, is elongate.

The blower device 1 comprises a source of compressed air connected to one or more filtering elements 3 through a blower valve 4 of known type. In the case in hand, the compressed air source comprises a tank 5 having an inlet 6 and an outlet 7. The inlet 6 is supplied with compressed air so that the tank 5 is maintained at a controlled constant pressure. The outlet 7 is connected through a conduit 8 to the valve 4. In normal filter 2 use the valve 4, which can be for example a diaphragm-type valve, closes the connection between the tank 5 and the filtering element 3. When the filtering element 3 is dirty, the valve 4 can be opened on command for a brief and controlled time in order to send a predetermined quantity of compressed air able to clean the filtering element 3 itself. Means of known type are provided for periodically opening the valve 4, which means might be, for example, a timer.

The device 1 is further provided with a longitudinally-developing distributor conduit 9, having at one end an inlet 10 for the compressed air, and being connected to the valve 4. The distributor conduit 9 is further provided, on a lateral surface thereof, with at least one outlet opening 11 through which the compressed air is directed at the filtering element 3. In the illustrated embodiment the distributor conduit 9 inferiorly exhibits a plurality of outlet openings 11, aligned along a parallel direction to the longitudinal axis of the distributor conduit 9 itself. The outlet openings 11 are situated above the filtering element 3 and are distributed uniformly and regularly. The row of outlet openings 11 extends parallel to the filtering element 3 so that the compressed air outletting from the distributor conduit 9 can be directed on to the filtering elements 3 over its entire length.

Each outlet opening 11 is located at a lower end of a nozzle 12 having at least one initial tract 12a with a gradually downwards-converging transversal section for the air passage, i.e. in a direction corresponding to the location of the filtering element 3 to be cleaned. In the illustrated embodiment the initial tract 12a is followed by a brief intermediate tract 12b having a constant-section transversal passage. The tract 12b is followed in turn by a short final tract 12c which is slightly divergent and terminates in the outlet opening 11. The special conformation of the nozzle 12 causes a Venturi effect in the air flow crossing it.

The distributor conduit 9 comprises a row of nozzles 12, distanced one from another and distributed over the whole length of the conduit 9. Each nozzle 12 exhibits a longitudinal axis the direction of which is perpendicular to the direction of the longitudinal axis of the distributor conduit 9.

The inlet 13 of the nozzle 12, opposite to the lower end bearing the outlet opening 11, is afforded on a convex surface 14 having the convexity facing internally of the distributor conduit 9. In particular, the inlet 13 of the nozzle 12 is at the summit of a projecting element 15 internal of the distributor conduit 9.

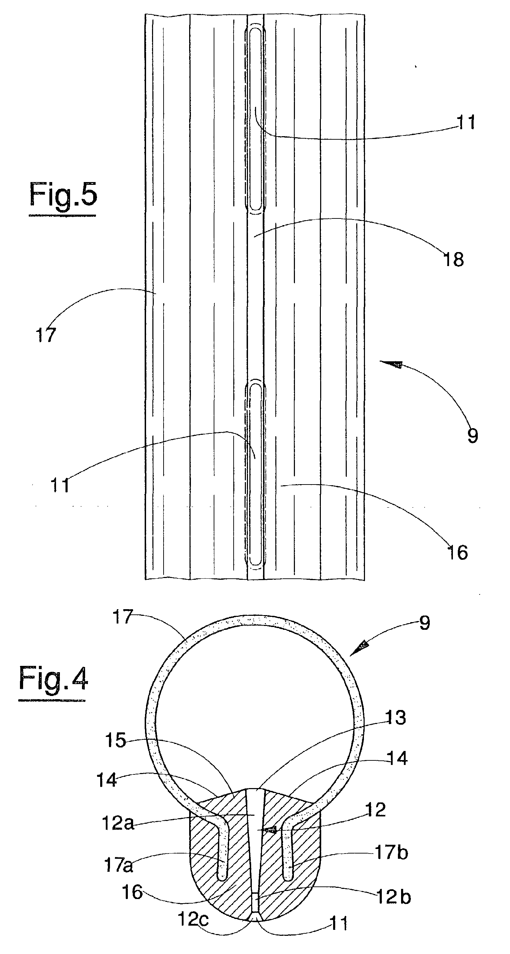

Each nozzle 12 exhibits an oblong transversal air passage section, which develops in length in a parallel direction to the longitudinal axis of the conduit 9. In figure 5 it can be seen that the shape of the outlet openings 11 of the various nozzles 12 is elongate in a parallel direction to the conduit 9 axis.

The nozzles 12 are afforded internally of a longitudinal element 16 made of plastic and solidly constrained and parallel to the distributor conduit 9. The lower external surface of the longitudinal element 16 is rounded. The outlet openings 11 are located in the lower and central zone of the rounded surface. The diverging final tracts 12c of the various nozzles 12 are created by the presence of a continuous narrow groove 18 scored in the longitudinal element 16 and extending in a parallel direction to the axis of the longitudinal element 16.

The distributor conduit 9 comprises a perimeter wall 17, made of metal, which is tubular in shape but open, having two projecting longitudinal lips 17a and 17b which are sunk into the plastic longitudinal element 16. The perimeter wall 17 is preferably made of stainless steel and exhibits a shiny internal surface.

The perimeter wall 17 is mostly cylindrical in shape, except for the lower zone where it is fixed to the longitudinal element 16. The longitudinal element 16 is made by vulcanization of a relatively stiff plastic material directly on to the lips 17a and 17b of the perimeter wall 17, using a specially-shaped die which enables the nozzles 12 to be formed at the same time.

It has been seen that thanks to the special shape and distribution of the nozzles 12, the energy of the compressed air can be directed onto dirty filtering element 3 surfaces, with a better than before exploitation of the energy, giving a better, and cleaner, result. In particular it has been observed that there is a slight expansion of the various air jets outletting from the nozzles 12, which enables the air to act more fully on the filtering elements 3, completely detaching the dust particles over the whole surface of the filtering elements 3. The distributor conduit 9 allows the compressed-air energy to be concentrated and directed so that it reaches the most important zones of the filtering element 3 and thus gives a very high performance.

It has also been observed that there is reduction in pressure loss, thanks to the fact that the inlet 13 of each nozzle 12 is afforded in a projecting element 15 which is slightly raised with respect to the cylindrical perimeter wall 17 and facing inwards of the distributor conduit 9.

During operation, the shape of the nozzles 12 allows for a progressive acceleration of the compressed-air flow, with relatively low losses of energy. Thanks to the special structure of the distributor conduit 9, air jets can be obtained which enjoy a high kinetic energy. Preferably each nozzle 12 should be shaped and dimensioned so that the air flow passing through it is substantially laminar, or more or less so.

## Claims

1. A blower device for cleaning dust filters, comprising:
a tank (5) of compressed air, connected to at least one filtering element (3) of a filter (2) through a valve (4) which during normal use of the filter (2) is closed and which can periodically be opened on command in order to send compressed air for cleaning the filtering element (3);
a distributor conduit (9), extending longitudinally, having at least one inlet (10) for the compressed air connected to the valve (4) and at least one outlet opening (11) which is situated on a perimeter surface of the conduit (9) and through which the compressed air is directed on to the filtering element (3);
characterised in that the outlet opening (11) is located at an end of a nozzle (12) comprising at least a first tract (12a) having a transversal passage section for the compressed air which gradually converges towards the outlet opening (11).

2. The device of claim 1, characterised in that the nozzle (12) comprises at least one terminal tract (12c) having an air passage transversal section which gradually diverges towards the outlet opening (11).

3. The device of claim 2, characterised in that the nozzle (12) comprises at least one intermediate tract (12b), comprised between the first tract (12a) and the terminal tract (12c), which is provided with a constant passage section.

4. The device of any one of the preceding claims, characterised in that the nozzle (12) extends lengthwise from an inlet end (13) to the outlet opening (13), in a direction which is perpendicular to a longitudinal axis of the distributor conduit (9).

5. The device of any one of the preceding claims, characterised in that the nozzle (12) exhibits an inlet end (13) which is opposite to an end affording the outlet opening (11), which inlet end (13) is located on a convex surface (14) having a convexity facing internally of the distributor conduit (9).

6. The device of any one of the preceding claims, characterised in that the nozzle (12) exhibits an inlet end (13), situated opposite to the end affording the outlet opening (11), which is situated at a summit of a projecting element (15) which projects inwardly of the distributor conduit (9).

7. The device of any one of the preceding claims, characterised in that the air passage transversal section through the nozzle (12) is elongate and in a parallel direction to the longitudinal axis of the distributor conduit (9).

8. The device of any one of the preceding claims, characterised in that the nozzle (12) is afforded internally of a longitudinal element (16) made of plastic and which is solidly constrained and parallel to the distributor conduit (9).

9. The device of claim 8, characterised in that the distributor conduit (9) comprises a perimeter wall (17), made of metal, tubular in shape and having two oppositely-situated projecting longitudinal lips (17a and 17b) which are buried in the plastic longitudinal element (16).

10. The device of any one of the preceding claims, characterised in that it comprises a plurality of the nozzles (12), aligned and distanced one from another in a parallel direction to the longitudinal axis of the distributor conduit (9).
